Europäisches Patentamt

(19) European Patent Office

Office européen des brevets

(11) Publication number: **0 107 381**
**A1**

(12) # EUROPEAN PATENT APPLICATION

(21) Application number: **83305797.9**

(51) Int. Cl.³: **B 65 G 1/02**

(22) Date of filing: **28.09.83**

(30) Priority: **30.09.82 US 431313**

(71) Applicant: **Romanowitz, Harold M., 3088 Alcazar Drive, Burlingame California 94010 (US)**

(43) Date of publication of application: **02.05.84 Bulletin 84/18**

(72) Inventor: **Romanowitz, Harold M., 3088 Alcazar Drive, Burlingame California 94010 (US)**

(84) Designated Contracting States: **AT BE CH DE FR GB IT LI LU NL SE**

(74) Representative: **Wisher, Michael Frederick et al, Urquhart-Dykes & Lord 47 Marylebone Lane, London W1M 6DL (GB)**

(54) Material handling system and method.

(57) A material-handling system (10, 76) for handling material (16) between a first station and a second station including a conveyor (12) for conveying the material (16) to the first station and a rack (24) for supporting the material (16) between the conveyor (12) and the second station. The system (10, 76) is characterized by the rack (24) having a load-supporting bottom portion (26) for being disposed with the conveyor (12) so that the conveyor (12) extends upwardly above the load-supporting bottom portion (26). A method of transporting the material (16) includes the steps of disposing the rack (24) having the load-supporting bottom portion (26) with the conveyor (12) so that the conveyor (12) extends upwardly above the load-supporting bottom (26), conveying the material (16) into the rack (24) while supported on the conveyor (12), effecting relative vertical movement between the rack (24) and the conveyor (12) to transfer the material (16) from the conveyor (12) to the rack (24), and transporting the rack (24) away from the conveyor (12) to the second station.

0107381

– 1 –

## TITLE

Material-handling system and method.

## TECHNICAL FIELD

The instant invention relates to a material-handling system for handling material such as that loaded on a pallet between a loading station and a storage station or between other stations. The instant invention further relates to a method of transporting the material between the stations.

## BACKGROUND ART

Efficient transfer and storage of palletized materials and similarly shaped items require specialized material-handling equipment. Generally, pallets are transferred between points on a pallet conveyor or by fork lift truck. Storage of palletized material is generally accomplished in· stationary racks with the pallets stored and retrieved by fork lift trucks or by stacker cranes. In some cases, palletized material is stacked directly one upon another by fork lift trucks. In other cases, the palletized material stacks are supported by frames attached to the pallet.

Fork lift trucks are commonly used in conjunction with drive-in or drive-thru stationary racks to achieve dense storage. The fork lift trucks are usually driven by operators but in some automatic systems they are driverless, following a guide wire. In other installations, the fork lift trucks drive down an aisle with the rack entry perpendicular to the direction of fork lift truck travel. Such systems provide good access to all stored material but result in a lower storage density, and generally require an operator for each fork lift truck. High-rise automatic storage and retrieval systems (AS/RS) are commonly used where a large number of pallets are to be stored at relatively high densities and where a more automated operation is desired.

A problem arises with the fork lift systems in that maximum production rates are limited, fork lift maintenance costs are high, and operators are costly. Also, there are practical limits to how high fork lifts can safely and efficiently store material. On the other hand, high-rise automatic storage and retrieval systems are expensive, require a special building, have only moderate storage density, and are not very flexible. Both methods have the disadvantage of requiring fixed storage racks which are expensive and require expensive foundations to maintain in good alignment.

A problem with the transfer of materials by conveyor over any distance is that an expensive and complex installation is required, particularly when multiple point interconnection is necessary. Another problem is that such systems occupy substantial valuable floor space and prevent easy access to other equipment. Such equipment has a large number of moving parts permanently distributed along the conveyor route, making it difficult and expensive to maintain a facility to a high standard of working efficiency, particularly when the conveyor route is exposed to poor conditions such as dirt, sand, extreme temperatures and the like.

The instant invention provides means for efficiently storing and transporting materials on pallets, or in other bottom-supported forms by use of predominantly overhead material-handling equipment

## STATEMENT OF THE INVENTION

In accordance with the present invention, there is provided a material-handling system for handling a load of material between a first station and a second station including a conveyor for conveying the load of material between the first station and a rack for supporting the load of material between the conveyor and second station. The system is characterized by the rack having a pallet-supporting bottom portion for being disposed with the conveyor means so that the conveyor extends upwardly above the load-supporting bottom portion.

The instant invention further provides a method of transporting the load of material between the first station and the second station, including the steps of disposing the rack having the load-supporting bottom portion with the conveyor so that the conveyor extends upwardly above the load-supporting bottom portion, conveying the load of material into the rack while supported on the conveyor, effecting relative vertical movement between the rack and the conveyor to transfer the load of material from the conveyor to the rack, and transporting the rack away from the conveyor to the second station.

## FIGURES IN THE DRAWINGS

Several embodiments of a material-handling system constructed in accordance with the present invention will now be described, by way of example only, with reference to the accompanying drawings, in which:

FIGURE 1 is a fragmentary elevational view of a material-handling system constructed in accordance with the instant invention;

FIGURE 2 is an elevational view taken substantially along lines 2-2 of FIGURE 1;

FIGURE 3 is a plan view taken substantially along lines 3-3 of FIGURE 2;

FIGURE 4 is a plan view partially in cross section and taken substantially along lines 4-4 of FIGURE 1; and

FIGURES 5a and b are elevational views of a second embodiment of the instant invention.

## DETAILED DESCRIPTION OF THE DRAWINGS

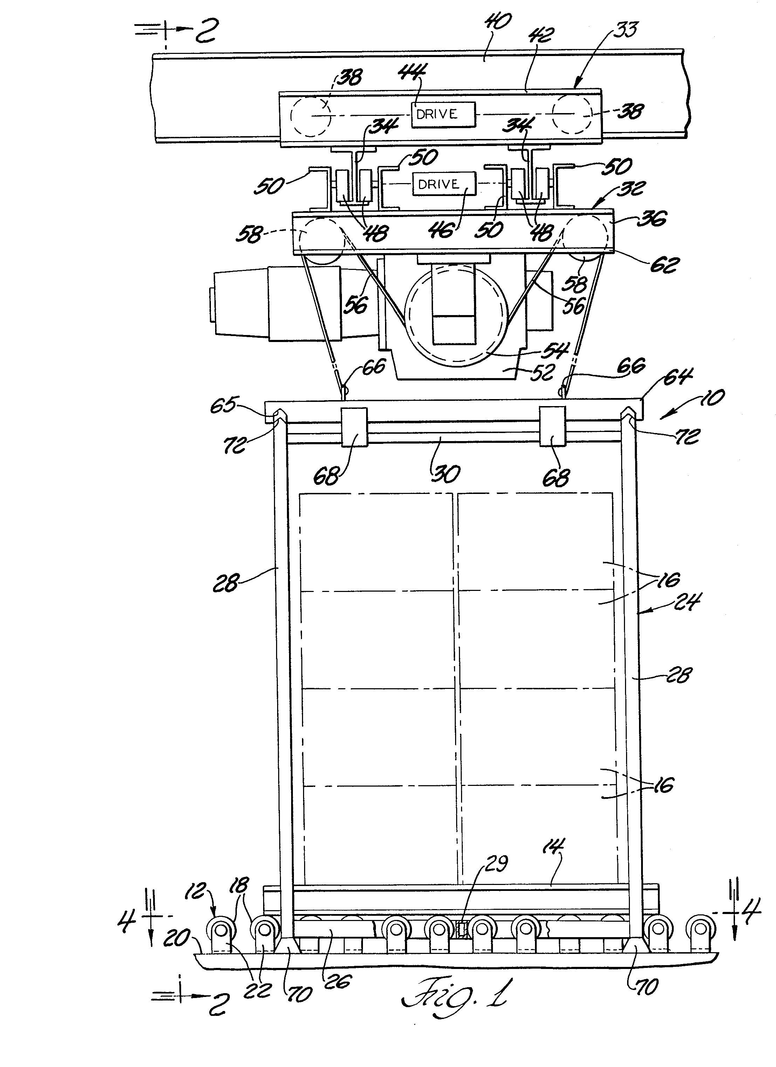

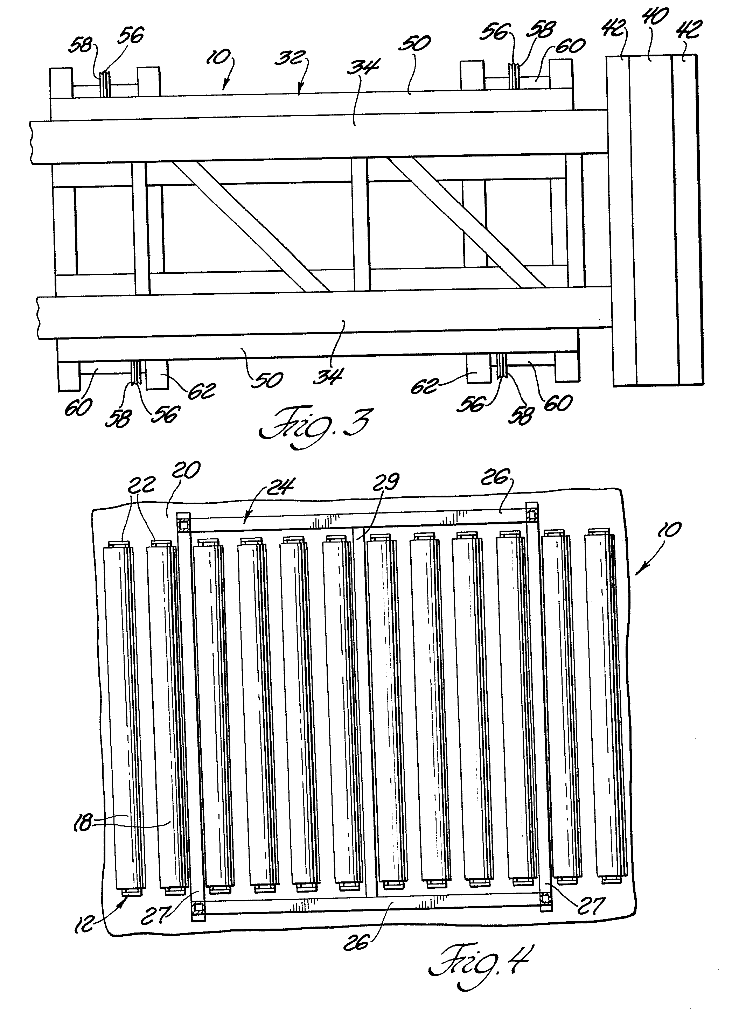

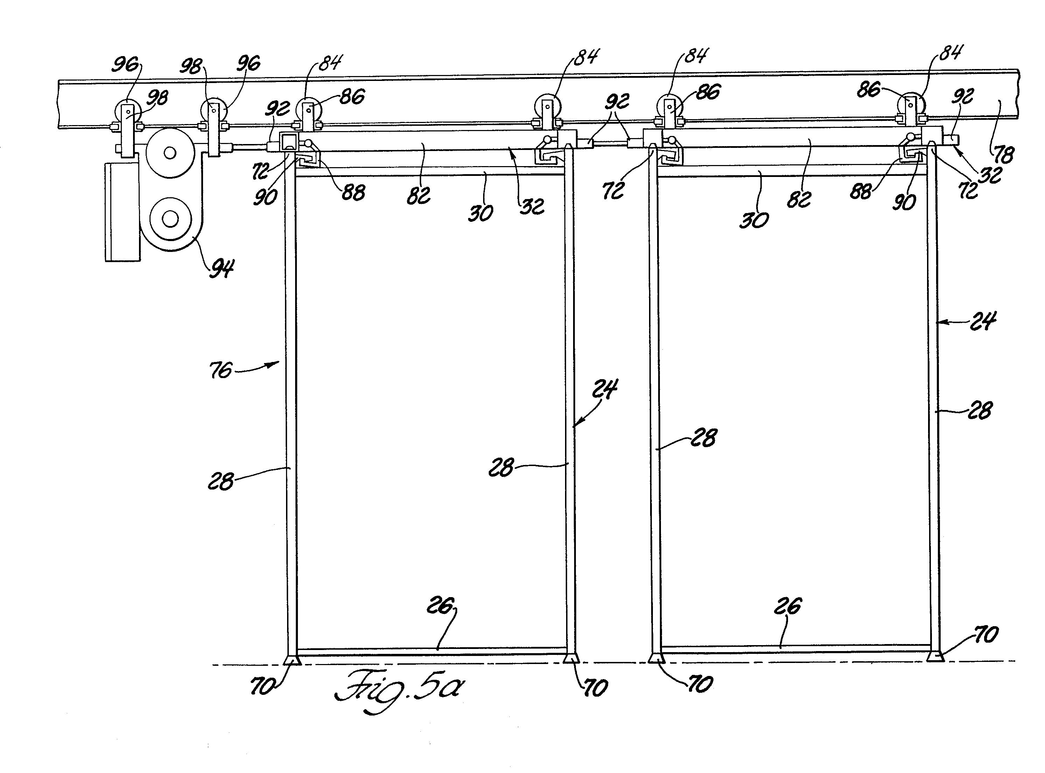

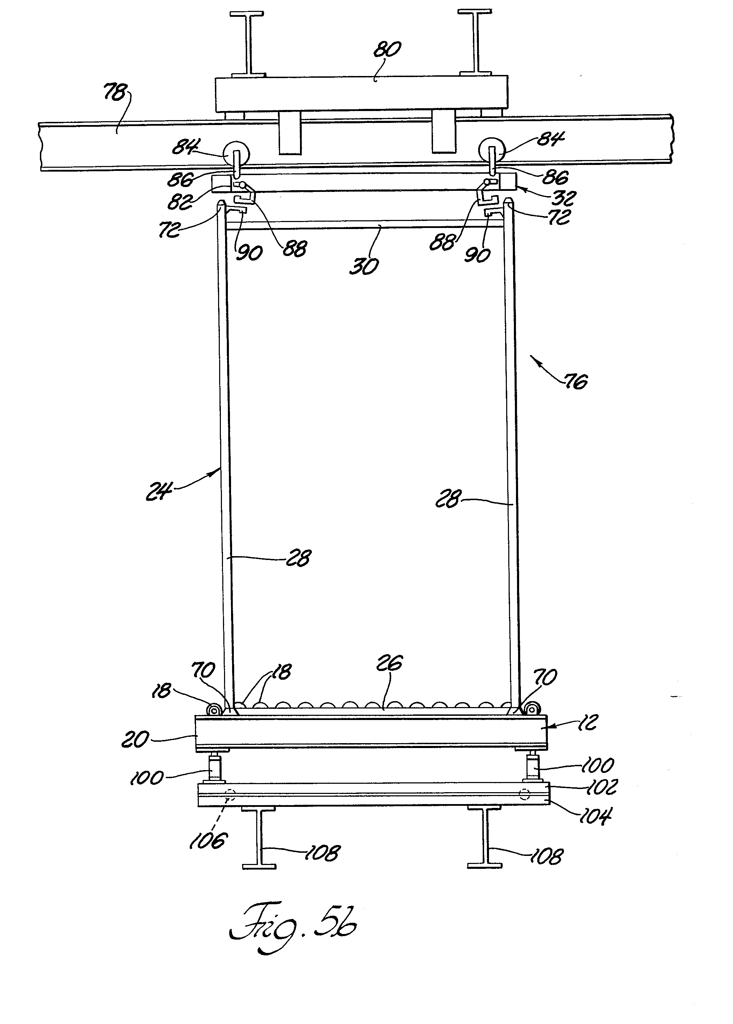

A first embodiment of a material-handling system for handling a load of material between a first station, such as where materials are received, and a second station, such as a storage area where materials may be stored in process for later retrieval and use, is generally shown at 10 in FIGURES 1 through 4. Similar numbers will be used to designate similar structure of the second embodiment shown in FIGURES 5a and 5b.

The material-handling system 10 includes conveyor means generally indicated at 12 for conveying a load of material 16 to a loading station. The material 16 may be loaded on a pallet 14. The pallet 14 provides a platform upon which a plurality of materials, schematically shown at 16, are supported. Alternatively, the material itself may be loaded on the conveyor if properly packaged or shaped, as described below. During the process of moving the materials 16, the materials 16 may be transported on pallets 14 and received at the loading station. The materials 16 are placed on the conveyor means 12 for direct transport to the material-handling system 10. The conveyor means 12 may comprise a plurality of cylindrical rollers 18 supported on a platform 20 by bearing supports 22. Alternatively, the conveyor means 12 may comprise a plurality of aligned tires or other means which define a conveying surface upon which the pallets 14 may be conveyed. The conveyor may also include a stop, fixed or movable, to position the load of material at a specific point on the conveyor 12.

The system 10 further includes rack means generally indicated at 24 for supporting the pallet 14 between the conveyor means 12 and the second station. The rack means 24 has an open pallet-supporting bottom portion defined by cross beams 26 and 27 for being disposed over the conveyor means 12 so that the rollers 18 of the conveyor means 12 extend upwardly through the cross beams 26 and 27. More specifically, the rack means 24 comprises a rack or frame structure 24 including four vertical beams 28 extending upwardly from the cross beams 26 and 27 of the bottom portion. The rack 24 may also include internal cross beams 29 disposed between the end cross beams 27. Upper cross beams 30 interconnect the upper portions of the vertical beams 28 as the cross beams 26 and 27 connect the lower portions of the vertical beams 28. The cross beams 26 and 27 of the base portion define an open bottom which, when disposed over the rollers 18 of the conveyor means 12, allows the rollers 18 to extend upwardly through the cross beams 26 and 27 thereby exposing the rollers 18 above the bottom portion. In other words, the cross beams 27 are interleaved with the conveyor means 12 as the cross beams 26 are disposed along the length of the conveyor. The internal cross beam 29 also intermeshes or interleaves with the conveyor 12. More than one such internal cross beam 29 may be used. It is also possible to use cross beams in the other or both directions if the conveyor is constructed differently than shown. Accordingly, when the rack means 24 is disposed over the conveyor means 12, a load of material 16 or a load of material 16 supported on a pallet 14 may be conveyed over the rollers 18 so as to be disposed over the cross beams

0107381

- 6 -

27 of the base portion of the rack 24. The load of material without a pallet must be of a dimension having a width greater than the distance between the cross beams 27 and 29 so as to be engaged and supported by the beams 27 and 29, as discussed below.

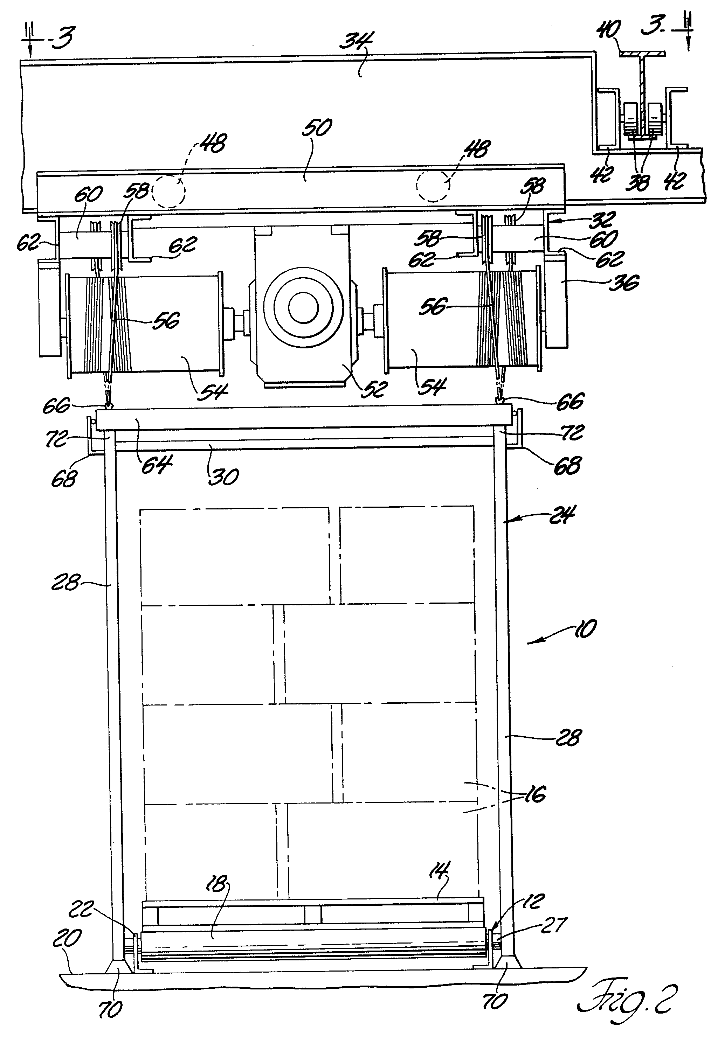

The system 10 includes transport means generally indicated at 32 for transporting the rack 24 between the conveyor means 12 and the storage station or any other accessible location. As shown in FIGURES 1, 2, and 3, the transport means 32 includes a first under-running double track crane bridge, generally indicated at 33 and a trolley 36 supported thereon for rolling engagement thereover. The crane bridge 33 is comprised of two track beams 34 and two supporting end truck assemblies 42 which include wheels 38. A drive mechanism schematically shown at 44 drives the bridge 33 along the stationary building-supported double beam runway 40. The trolley 36 is supported on the bridge 33 by wheels or rollers 48 rotatably disposed on support beams 50. The trolley 36 is driven across the bridge 33 by drive mechanism 46. The drive mechanisms 44 and 46 may be adjustable speed drives controlled by a computer control system so as to facilitate and/or position the trolley 36 at desired locations such as at the storage station or over the conveyor means 12. The trolley 36 includes a hoisting drive means comprising a hoist motor, a hoist brake and a hoist gear reducer 52. Rotatable cable drums 54 are operatively connected to the gear reducer and cables 56 wound thereabout to be extended or retracted upon rotation of the drums 54. The hoist cables 56 are entrained about pulleys 58, the pulleys 58 being supported on rods 60 disposed between support beams 62. An anti-twist lifting beam 64 is operatively connected to the cables 56 at 66. Any suitable means may be used to interconnect the cables 56 to the lifting beam 64. First latch means 68 are schematically shown in FIGURES 1 and 2, the rack 24 including second latch means for reversibly engaging the first latch means 68 whereby the transport means 32 can transport the rack 24. More specifically, the lifting beam 64 includes latch means 68 which engages the latch means of the rack 24 so that the rack 24 can be reversibly connected to and transported by the trolley 36. Alternatively, the lifting beam 64 may include a gripping device for gripping the projections 72 of the rack 24. Thusly, the rack 24 can be raised and lowered from the conveyor means 12 and at the storage area as the lifting beam 64 is moved, positioned and operated in three dimensions by the combination of movement of the hoist 52, the trolley 36 and the bridge 33.

The system 10 may include anti-sway or anti-twist means for inhibiting swaying or twisting of the rack 24 during the raising and lowering and travelling of the rack 24 by the hoist 52, trolley 32, or bridge 33. More particularly, the lifting beam 64 includes the first latch means 68, the anti-sway or anti-twist means including the plurality of pulleys 58 which are spaced so that some of the cables 56 taper inwardly from the pulleys 58 to the lifting beam 64 to inhibit swaying or twisting of the rack 24 connected to the lifting beam 64, as shown in the Figures or, alternatively, all of the cables 56 may taper inwardly. The configuration of the inwardly tapering cables 56 provide anti-sway and anti-twist capability to the system 10 when the rack 24 is connected to the lifting beam 64.

At least two cables 56 running over pulleys 58 spaced apart as shown, or equivalent reeving are required to inhibit twisting and at least three cables 56 running over pulleys 58, spaced apart similarly to the four shown, or equivalent reeving are required to inhibit swaying. It must be noted that if all the cables pass or terminate in close proximity that the anti-twist capability is lost or diminished while the anti-sway capability may be improved.

The tendency to twist is diminished by increasing the spacing apart of the tendency to sway is diminished by greater tapering angles on the cables. The resultant force effects of increased cable taper angles must be accommodated in sizing the equipment, including hoist drive equipment 52.

The rack 24 may comprise the four vertical beams 28 connected at its bottom portion by the cross beams 26 and 27 at its upper portion by the upper cross beams 30. Certain of the cross beams may be eliminated. Depending upon the desired use, additional internal cross beams 29 may be disposed across the bottom portion of the rack 24 with conveyor construction different from that shown, cross beams perpendicular to the cross beam 29 shown may be used, with or in place of those shown. The rack 24 may further include legs 70 extending downwardly from the vertical beams 28. Each of the vertical beams 28 further includes an upper end portion 72 having mating means in the configuration of a post or projection 72 for being received within the legs 70 of the vertical beams 28 of a second rack 24 for mating engagement therewith whereby the racks 24 may be stacked upon each other in good alignment. The mating means may also be structurally independent of the vertical beams 28. Each leg is a hollow four-sided pyramid which aligns the inserted portion therewithin. Alternative configurations may also be used. Hence, racks may be stored one on top of the other in good alignment at the storage station as well as being stored side-by-side.

In operation, a pallet 14 having material 16 disposed thereon, is transported over the rollers 18 of the conveyor means 12 to be positioned over the cross beams 27 and 29 of a rack 24. A crane with lifting beam positions over the rack, lowers its lifting beam to mate with the rack. The first latch means 68 of a lifting beam 64 are connected to the second latch means of a rack 24. The hoist motor 52 then retracts the cables 56 so as to raise the lifting beam and rack 24, the rack 24 carrying the pallet 14 and materials 16. The rack 24 is transported by bridge and trolley motion along the first and second rails 34 and 40 to a predetermined position in the storage area and the rack 24 is either lowered onto a second rack or is placed on a support structure or floor.

The lifting beam is unlatched and the rack with load remains. The crane with lifting beam hoists and travels to another rack for another move.

Nonpalletized material may likewise be conveyed into the rack and carried away as long as the material is large enough to be supported by the cross beams 27 and 29 or any additional cross beams or supports that may be interleaved with the conveyor means.

The rack 24 may alternatively be constructed with the conveyor 12 permanently in its bottom so that it travels with the rack 24. In such a case, the conveyor 12 would be raised above the support beams 27 and 29 to convey the load 16 into or out of the rack 24, and lowered to support the load 16 on the cross beams 27 and 29 so that the rack 24 may be moved without the load 16 shifting. Another alternative construction is where the conveyor is partly an air bubble or where air pressure is used as the conveying means.

A second embodiment of the instant invention is shown generally at 76 in FIGURES 5a and b. A trolley 82 is supported on a monorail I-beam 78. An alignment device 80 is used to hold the trolley 82 in alignment with the position of the rack 24 and its support 12 so that the rack 24 is properly positioned to be raised to the trolley 82. Provision is also made to support the trolley 82 from being lifted while the rack 24 is being raised and latched. The trolley 82 is a lifting beam or frame 82 supported directly on the monorail I-beam 78 by rollers 84, the rollers 84 being operatively connected to the lifting beam 82 by legs 86. First latch means 88 extend downwardly from the lifting beam 82 and engage the second latch means 90 of the racks 24. The latch means 88 and 90 may be constructed in various configurations and are shown schematically in FIGURES 5a and 5b. The latch means 88 may be stationary relative to the trolley 82. Accordingly, the rack 24 is raised to the trolley 82 and latched thereto. The latch means is reversible and may be operated by a solenoid, hydraulically, by levers from an external actuator or by other means to latch or unlatch as may be desired. Once latched, and the load is supported thereon, the latches are so intermeshed that they will not unlatch until the load is relieved. The latches prevent relative movement between the rack (24) and the trolley 82 while the rack (24) is latched to the trolley 82.

The system 76 may include a plurality of trolleys 82. The trolleys 82 may include reversible connecting means 92 for connecting one of the trolleys 82 to the connecting means 92 of an adjacent one of the trolleys 82 supported from the monorail 78 to form a train of trolleys 82 supported by the monorail 78. The connecting means 92 are shown schematically in FIGURE 5a and they may be constructed in various configurations. In operation, the connecting means 92 are bolted links which interconnect adjacent ones of the plurality of trolleys 32 supported along the monorail 78. Automatically reversible means may be used as well.

The system 76 includes drive means 94 comprising a motor operatively connected to the train of trolleys 82 to move the plurality of trolleys 82 over the monorail 78 as a train. The drive means 94 is supported from the monorail 78 by rollers 96 rotatably supported on legs 98. In operation, the drive means 94 tows the train of racks 24 connected thereto along the monorail 78 thereby transporting a plurality of racks 24 in tandem by a single drive means 94. Thusly, a plurality of racks 24 can be efficiently moved to a storage or work station

- 11 -

simultaneously. Alternatively, one or more trolleys may be equipped with a drive mechanism and/or may be driven by other means such as a drive chain or drive rope. On longer trains of trolleys several drive mechanisms may be required to move the train.

The system 76 includes elevating means, such as jacks 100, for selectively elevating and lowering the conveyor means 12. The conveyor 12 or the rack support 20 may be raised. The elevating means or jacks 100 raise the rack 24 to the trolley 32 so that the latch means 88 of the trolley 82 can be connected to the latch means 90 of the rack 24. An elevating means, such as using four jacks upon which the rack rests directly, and which raises the rack and not the conveyor has the advantage of deinterleaving the rack and conveyor and causing the load to be supported and not move while being lifted. The system 76 further includes rotation means including a platform 102 supported on a second platform 104 by bearings 106 so that the platform 102 can be rotated relative to the second platform 104, the second platform 104 being fixedly supported on beams 108. In operation, a rack 24 supported on the platform 20 can be rotated so as to properly position the rack 24 relative to the trolley 32 so that the latching means 88 of the rack 24 can be connected to the latching means 90 of the trolley 82. The assembly 12 may have to be first raised before it is clear of the adjacent conveyor structure 12 to rotate. This capability makes the direction of the conveyor independent of the direction of the trolley.

The instant invention further provides a method of transporting the material 16 between a first station and a second station. The method includes the steps of disposing the rack 24 having the open load-supporting bottom portion defined by the cross beams 26, 27 and 29 over a conveyor 12 so that the conveyor 12 extends through the open load-supporting bottom 26, conveying the load 14 into the rack 24 while supported on the conveyor 12, raising the rack 24 to engage and lift the load 14 from the conveyor 12, reversibly latching the rack 24 to the trolley 82 to prevent relative movement therebetween while the rack 24 is latched to the trolley 82 and transporting the rack 24 with the load away from the conveyor 12 to the second station. In other words, relative vertical movement is effected between the rack 24 and the conveyor 12 to support or lift the load on the rack 24. The rack 24 then supports the load for movement to another station. A rack 24 is utilized having an open bottom of a width greater than the width of the load 14 and a length defined by the cross beams 27 and 29 which is less than the length of the load 14 so that the cross beams 27 and 29 engage and support the load 14 when the rack 24 is raised from the conveyor 12.

In order to make the direction of the conveyor 12 independent of the direction of the monorail 78, the rack 24 may be rotated by rotating its intermeshing conveyor section, by rotating its supports, or by rotating it while supported on a transfer conveyor or shuttle car.

The conveyor 12 may be raised to raise the rack 24 and rotated with the rack 24 supported thereon to position the rack 24 relative to the trolley 32 and then latched thereto. The rack 24, on a trolley 82, may then be transported along a monorail beam 78 to a second location or to the storage station. Several trolleys 32 may be latched together and travel as a train. Alternatively, the racks 24 may be raised by a winch 54 or drive motor 52 of the trolley 36, the winch 54 and rack 24 then being transported along the monorail 34 or 78 to a predetermined position. The bridge 33 is then transported along the rail 40 disposing the winch 54 and rack 24 at the storage station at a predetermined position. Alternatively, the winch may be located on a trolley 32 connected to a fixed monorail 78.

The monorail system may use straight track, curved track, switches, and other devices to facilitate the transit of the trolley 32 and rack 24 from one point to another. The rack bottom structure may sit on conveyor rollers 18 which are wide enough or so placed to support the rack without protruding up through the open rack bottom and, therefore, the pallet is supported by the rack and the whole assembly can be transported along the conveyor. Such a conveyor system could also have the lift 100 and reversible latching means 88, 90 to connect and disconnect the racks 24 from trolleys 32. Such a system could have the rack rotation means at one or more desired points under the monorail catch point, under the crane load or unload station or at some other desired point.

Such a system allows the transport of racks over long distances by a monorail train and the transfer for storage of the rack in a three dimensional field by the crane system 10. It also may enhance cycle time at load or unload points by allowing for accumulation of racks for subsequent quick transfer into an intermeshing conveyor, or will allow resolution of interferences between system elements. One variation of the equipment described is to add a hoist as described in the first embodiment to the trolley described in the second embodiment. The resulting machine is within the scope of the invention and may be found to have advantages on some applications. Other variations of the equipment described in the first embodiment include the crane structure being a gantry, semi-gantry, top riding bridge crane, monobox girder construction, or other like alterations.

The invention has been described in an illustrative manner, and it is to be understood that the terminology which has been used is intended to be in the nature of words of description rather than of limitation.

Obviously, many modifications and variations of the present invention are possible in light of the above teachings. It is, therefore, to be understood that within the scope of the appended claims wherein reference numerals are merely for convenience and are not to be in any way limiting, the invention may be practiced otherwise than as specifically described.

- 1 -

CLAIMS

The embodiments of the invention in which an exclusive property or privilege is claimed are defined as follows:

1. A method of transporting material (16) between a first station and a second station characterized by the steps of; disposing a rack (24) having a load-supporting bottom portion (26) with a conveyor (12) so that at least a portion of the conveyor (12) extends upwardly above the load-supporting bottom (26), conveying a load of material (16) into the rack (24) while supported on the conveyor (12), effecting relative vertical movement between the rack (24) and conveyor (12) to transfer the load of material (16) from the conveyor (12), to the rack (24), and transporting the rack (24) with the load supported thereon to the second station.

2. A method as set forth in claim 1 further characterized by utilizing a rack (24) having a bottom of a width greater than the width of the load of material (16) and a length defined by cross beams (26) which is less than the length of the load of material (16) so that the cross beams (26) engage and support the load of material (16) when the rack (24) is moved relative to the conveyor (12).

3. A method as set forth in claim 2 further characterized by connecting a top portion of the rack (24) to an anti-twist lifting beam (64) suspended from a trolley (32) to support the rack (24) from the top of the rack (24) by the lifting beam (64).

4. A method as set forth in claim 3 further defined by reversibly latching the lifting beam (64) to the rack (24) to connect the lifting beam (64) to the rack (24).

5. A method as set forth in claim 3 further defined by reversiby gripping the lifting beam (64) to the rack (24) to connect the lifting beam (64) to the rack (24).

6. A method as set forth in claim 1 further characterized by positioning the rack (24) relative to the trolley (32).

7. A method as set forth in claim 1 further characterized by raising the conveyor (12) to raise the rack (26).

8. A method as set forth in claim 1 further characterized by disposing the rack (24) on a rack support and rotating the rack support to position the rack (24).

9. A method as set forth in claim 1 further characterized by transporting the rack (24) along a monorail beam (78).

10. A method as set forth in claim 9 further characterized by transporting the rack (24) with a second rack (24) supported by the beam (78) and the racks (24) connected together in tandem as a train and transporting the racks (24) as a train along the beam (78) to the second station.

11. A method as set forth in claim 1 further defined as raising the rack support to lift the rack (24) to a trolley (82), latching the rack (24) to the trolley (82), and transporting the trolley (82) with the rack (24) supported thereby to the second station.

12. A method as set forth in claim 11 further defined by rotating the rack (24) to align the rack (24) to the trolley (82) and then latching the rack (24) to the trolley (82).

13. A method as set forth in claim 11 further characterized by lowering the rack (24) from the trolley (82) to stack the rack (24) upon other racks (24) at the second station.

14. A method as set forth in claim 1 further characterized by raising the rack (24) with a winch (52), transporting the winch (52) and rack (24) to another position.

15. A method as set forth in claim 14 further characterized by transporting the winch (52) and rack (24) on a runway girder or rail (40) to dispose the winch (52) and rack (24) at the second station.

16. A method as set forth in claim 1 further characterized by connecting a top portion of the rack (24) to an anti-twist lifting beam (64) suspended from a trolley (32) to support the rack (24) from the top of the rack (24) by the lifting beam (64).

17. A method as set forth in claim 16 further defined by reversibly latching the lifting beam (64) to the rack (24) to connect the lifting beam (64) to the rack (24).

18. A method as set forth in claim 16 further characterized by reversibly gripping the lifting beam (64) to the rack (24) to connect the lifting beam (64) to the rack (24).

19. A method as set forth in claim 1 further characterized by supporting the load of material (16) on a pallet (14) and conveying the pallet (14) into the rack (24) while supporting the pallet (14) on the conveyor (12) and raising the rack (24) to engage and lift the pallet (14) so as to lift the load of material (16).

20. A material-handling system (10, 76) for handling a load of material (16) between a first station and a second station, said system comprising: conveyor means (12) for conveying the load of material (16) to the first station; rack means (24) for supporting the load of material (16) during movement between said first station (12) and the second station and characterized by said rack means (24) having a load-supporting bottom portion (26) for being disposed with said conveyor means (12) so that said conveyor means (12) extends upwardly above said load-supporting bottom portion (26) for moving a load into and out of said rack whereby relative vertical movement may be effected between said rack means (24) and said conveyor means (12) to transfer the support of the load between said rack means (24) and said conveyor means (24).

21. A system as set forth in claim 20 further characterized by said rack means (24) including four vertical beams (28) extending upwardly from said bottom portion (26), and a top (72) and bottom (70) end portions having mating means for receiving said mating means of a second of said rack means (24) for mating engagement therewith whereby said rack means (24) may be stacked upon each other.

22. A system as set forth in claim 21 further characterized by said top end portions (72) including at least one upwardly extending projection (72), said bottom end portions (70) including at least one hollow member for receiving said projection (72) therein and defining said mating means.

23. An assembly as set forth in claim 22 further characterized by said bottom end portions (70) including upwardly tapering side walls.

24. An assembly as set forth in claim 23 further characterized by said projection (72) being integral with said vertical beams (28).

25. A system as set forth in claim 20 further characterized by including transport means (32) for transporting said rack means (24) between said conveyor means (12) and the second station and including first latch means (68, 88), said rack means (24) including second latch means (90) for reversibly engaging said first latch means (68, 88) whereby said transport means (32) can carry said rack means (24).

26. A system as set forth in claim 25 further characterized by said transport means (32) including a first rail (34, 78) and a trolley (36, 82) supported thereon for rolling engagement thereover, said trolley (36, 82) including said first latch means (68, 88).

27. A system as set forth in claim 25 further characterized by including a plurality of said trolleys (82), said trolleys (82) including connecting means (92) for connecting one of said trolleys (82) to the connecting means (92) of an adjacent second of said trolleys (82) to form a train of said trolleys (82) supported on said first rail (78).

28. A system as set forth in claim 27 including first drive means (94) operatively connected to said train of said trolleys (82) to move said plurality of trolleys (82) over said first rail (78) as a train.

29. A system as set forth in claim 25 further characterized by said trolley (36) including second drive means (52) operatively connected to said first latch means (68) for lowering and raising said first latch means (68) whereby said rack means (24) can be raised from and lowered to said conveyor means (12) and said storage area.

30. A system as set forth in claim 29 further characterized by including anti-sway and anti-twist means for inhibiting swaying of said rack means (24).

31. A system as set forth in claim 30 further characterized by including a lifting beam (64) including said first latch means (68), said anti-sway and anti-twist means including a plurality of pulleys (58), said drive means including at least three cables (56) entrained over said pulleys (58) and operatively connected to said lifting beams (64), said pulleys (58) being spaced so that said cables (56) are nonparallel relative to each other as said cables (56) extend away from said pulleys (58) to said lifting beam (64) to inhibit swaying and twisting of said rack means (24) connected to said lifting beam (64).

32. An assembly as set forth in claim 25 further characterized by said transport means (32) including a lifting beam (64) including said first latch means (68).

33. An assembly as set forth in claim 32 further characterized by said rack means (24) including four vertical beams (28) extending upwardly from said bottom portion (26), and a top (72) and bottom (70) end portions having mating means for receiving said mating means of a second of said rack means (24) for mating engagement therewith whereby said rack means (24) may be stacked upon each other.

34. An assembly as set forth in claim 33 further characterized by said top end portions (72) including at least one upwardly extending projection (72), said bottom end portions (70) including at least one hollow member for receiving said projection (72) therein and defining said mating means.

35. An assembly as set forth in claim 34 further characterized by said lifting beam (64) including a hollow receiver (65) for receiving said projections (72) when said rack means (24) is connected to said lifting beam (64).

36. An assembly as set forth in claim 35 further characterized by including anti-sway and anti-twist means for inhibiting swaying and twisting of said rack means (24).

37. An assembly as set forth in claim 36 further characterized by said anti-sway and anti-twist means including a plurality of pulleys (58), said drive means including at least three cables (56) entrained over said pulleys (58) and operatively connected to said lifting beams (64), said pulleys (58) being spaced so that said cables (56) are nonparallel relative to each other as said cables (56) extend away from said pulleys (58) to said lifting beam (64) to inhibit swaying and twisting of said rack means (24) connected to said lifting beam (64).

38. A system as set forth in claim 20 further characterized by including elevating means (100) for selectively elevating and lowering said rack means (24) at conveyor means (12).

39. A system as set forth in claim 20 or 38 further characterized by including rotation means (102, 106) for rotating at least a portion of said conveyor means (12) and one of said racks (24) disposed thereon.

40. An assembly as set forth in claim 20 or 38 further characterized by including rotation means for rotating said rack means (24) relative to said conveyor means (12).

41. An assembly as set forth in claim 20 further characterized by including transport means (32) for transporting said rack means (24) between said conveyor means (12) and the second station and including first gripping means (68, 88), said rack means (24) including second gripping means (90) for reversibly engaging said first gripping means (68, 88) whereby said transport means (32) can carry said rack means (24).

1/5

0107381

*Fig. 1*

*Fig. 2*

0107381

Fig. 3

Fig. 4

Fig.5a

0107381

Fig. 5b

# 0107381

European Patent
Office

**EUROPEAN SEARCH REPORT**

Application number

| | **DOCUMENTS CONSIDERED TO BE RELEVANT** | | EP 83305797.9 |

| Category | Citation of document with indication, where appropriate, of relevant passages | Relevant to claim | CLASSIFICATION OF THE APPLICATION (Int. Cl. ³) |
|---|---|---|---|
| A | DE - B - 1 216 792 (PALMER-SHILE COMPANY) -- | | B 65 G 1/02 |
| A | DE - A - 2 224 809 (MENZEL MASCHINENFABRIK) -- | | |
| A | DE - A - 2 119 105 (AUSSERLECHNER) ---- | | |

|  | **TECHNICAL FIELDS SEARCHED (Int. Cl. ³)** |
|---|---|
| | B 65 G 1/00 |
| | B 65 G 61/00 |
| | B 66 C 11/00 |

The present search report has been drawn up for all claims

| Place of search | Date of completion of the search | Examiner |
|---|---|---|
| VIENNA | 30-12-1983 | PISSENBERGER |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO Form 1503 03 82